# EUROPEAN PATENT APPLICATION

(11) **EP 4 318 217 A1**
(43) Date of publication of application: **07.02.2024**
(21) Application number: 23175962.2
(22) Date of filing: 30.05.2023
(51) Int. Cl.: G06F 8/65, G06F 21/57, G06F 21/64

(54) **METHOD, APPARATUS, AND STORAGE MEDIUM FOR UPDATING VEHICLE SOFTWARE**

(30) Priority: 05.08.2022 CN 202210934800
(71) Applicant: Automotive Data of China (Tianjin) Co., Ltd., Tianjin (CN)
(72) Inventor: ZHANG, Yanan, Tianjin (CN); LI, Yan, Tianjin (CN); ZHANG, Xiangyu, Tianjin (CN); ZHANG, Wang, Tianjin (CN); LI, Zhiqiang, Tianjin (CN); YANG, Faxue, Tianjin (CN); ZHAO, Wanli, Tianjin (CN); GUO, Jiansheng, Tianjin (CN)
(74) Representative: Chung, Hoi Kan

(57) **Abstract**

The invention relates to the field of vehicles, and provides a method, apparatus, and storage medium for updating vehicle software. The method includes: calculating a digest of a upgrade package; signing the digest to obtain a signed digest; decrypting an encrypted symmetrical key by a private key of a communication certificate to obtain a symmetrical key; generating a first random identity code; signing the first random identity code to obtain a first identity signature; transmitting the first identity signature and the encrypted upgrade package to a content distribution system; verifying, by the content distribution system, the identify of an online upgrade system based on the first identity signature. This enhance the security during software upgrades, and safeguard the network security and data security at every stage of online upgrades for networking vehicles.

## Description

### FIELD OF THE INVENTION

The present invention relates to the field of vehicles, especially to a method, apparatus, and storage medium for updating vehicle software.

### BACKGROUND OF THE INVENTION

With the progressive advancement of vehicle intelligence and connectivity, an increasing number of Microcontroller Units (MCUs) and Electronic Control Units (ECUs) are being employed in automotive systems, accompanied by a corresponding increase in the frequency of software iterations.

The Over-the-Air (OTA) technology, which facilitates remote upgrades, finds extensive utilization in software upgrades for vehicles. However, given the unique nature of automobiles as consumption endpoints, the process of online upgrades must prioritize vehicle safety.

In view of this, the present invention is proposed.

### SUMMARY OF THE INVENTION

To address the aforementioned technological challenges, the present invention provides a method, apparatus, and storage medium for updating vehicle software. By enhancing the vehicle safety during the software upgrade process, the present invention provides comprehensive safeguards for network security and data security at every stage of online upgrades for networking vehicles.

Embodiments of the present invention provide a method for updating vehicle software. The method includes the following steps:
calculating, by an online upgrade system, a digest of an upgrade package to obtain a first digest value when a new upgrade package is generated in the online upgrade system;
transmitting, by the online upgrade system, the first digest value to a signature system;
signing, by the signature system, the first digest value to obtain a signed digest; feeding back, by the signature system, the signed digest to the online upgrade system; wherein the signed digest is configured to determine whether the upgrade package has been modified;
transmitting, by the online upgrade system, an application message to a key management system to obtain a symmetric key for encrypting the upgrade package; wherein the application message includes a communication certificate of the online upgrade system;
generating, by the key management system, the symmetric key based on the application message; encrypting the symmetric key using a public key of the communication certificate; and feeding back an encrypted symmetric key to the online upgrade system;
decrypting, by the online upgrade system, the encrypted symmetric key using a private key of the communication certificate to obtain the symmetric key; symmetrically encrypting the upgrade package using the symmetric key to obtain an encrypted upgrade package;
generating, by the online upgrade system, a first random identity code, and transmitting the first random identity code to the signature system; signing, by the signature system, the first random identity code to obtain a first identity signature, and feeding back the first identity signature to the online upgrade system;
transmitting, by the online upgrade system, the first identity signature and the encrypted upgrade package to a content distribution system;
verifying, by the content distribution system, the online upgrade system based on the first identity signature; storing the encrypted upgrade package for download requests from vehicle-side device when the online upgrade system is consistent with a first verification condition.

Embodiments of the present invention further provide an electronic equipment. The electronic equipment includes:
a processor and a memory;
the processor is configured for storing programs or instructions in the memory to execute the steps of the method for updating vehicle software according to any one of the embodiments of the invention.

Embodiments of the present invention further provide a computer-readable storage medium. The computer-readable storage medium is configured to store programs or instructions which enable a computer to execute the steps of the method for updating vehicle software according to any one of the embodiments of the invention.

Embodiments of the present invention demonstrate the following advantages.

Simultaneous use of symmetric and asymmetric keys ensures the security of the symmetric key by transmitting it in encrypted form using the asymmetric key. The encryption key for the upgrade package is securely stored in the key management system, facilitating the management of all historical versions of the upgrade package, and eliminating the risk of key loss. Sensible information is signed using digital certificates, enabling the recipient to verify the authenticity of the sender's identity and the integrity of the transmitted information. This mitigates the risk of disseminating forged information and prevents hijacking attacks during the upgrade process. The sender separates and distributes sensitive information, reducing the risk of a single attack compromising all sensitive information. The recipient verifies and cross-checks multiple instances of received information, establishing trustworthiness through successful verification and enhancing security trust levels. The content distribution system verifies the identity of the message sender, effectively preventing illegal systems from uploading unauthorized upgrade packages. The encrypted form of the upgrade package stored in the content distribution system makes it resistant to tampering and unauthorized access. All of these approaches significantly enhance the security of the software upgrade process, providing comprehensive safeguards for network security and data security at every stage of online upgrades for networking vehicles.

### BRIEF DESCRIPTION OF DRAWINGS

In order to illustrate the specific embodiments of the present invention or the technical solutions in the prior art more clearly, the following briefly introduces the accompanying drawings that need to be used in the description of the specific embodiments or the prior art. Obviously, the accompanying drawings in the following description are some embodiments of the present invention. For those of ordinary skill in the art, other drawings can also be obtained based on these drawings without creative efforts.
FIG. 1 is a flow diagram of a method for updating vehicle software according to embodiments of the present invention.
FIG. 2 is a schematic diagram showing the information exchange among the online upgrade system, the key management system, the signature system, and the content distribution system according to embodiments of the present invention.
FIG. 3 is a schematic diagram showing the information exchange among the online upgrade system, the key management system, the signature system, and the content distribution system according to embodiments of the present invention.
FIG. 4 is a schematic diagram showing the information exchange among the online upgrade system, the key management system, the signature system, and the content distribution system according to embodiments of the present invention.
FIG. 5 is a schematic diagram showing the information exchange among the online upgrade system, the key management system, the signature system, and the content distribution system according to embodiments of the present invention.
FIG. 6 is a schematic diagram of an electronic equipment according to embodiments of the present invention.

### DETAILED DESCRIPTION OF THE INVENTION

In order to make the objectives, technical solutions and advantages of the present invention clearer, the technical solutions of the present invention will be described clearly and completely below. Obviously, the described embodiments are only some, but not all, embodiments of the present invention. Based on the embodiments of the present invention, all other embodiments obtained by those of ordinary skill in the art without creative work fall within the protection scope of the present invention.

The method for updating vehicle software provided in the embodiments of the present invention specifically focuses on securely upgrading the firmware (which is a software embedded in hardware devices) on the vehicle side through OTA. The method for updating vehicle software, as provided in the embodiments of the present invention, can be executed by a vehicle software upgrade apparatus.

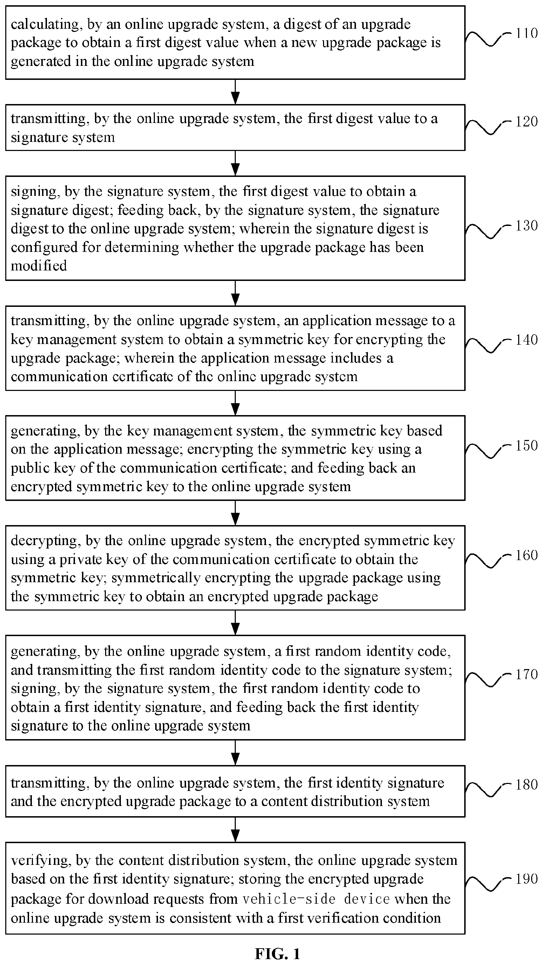

FIG. 1 is a flow diagram of a method for updating vehicle software according to embodiments of the present invention. Referring to FIG. 1, the method for updating vehicle software comprises the following steps.

S 110, calculating, by an online upgrade system (OUS), a digest of an upgrade package (UP) to obtain a first digest value when the upgrade package is generated in the online upgrade system.

S 120, transmitting, by the online upgrade system, the first digest value to a signature system (SS).

S 130, signing, by the signature system, the first digest value to obtain a signed digest; feeding back, by the signature system, the signed digest to the online upgrade system; wherein the signed digest is configured to determine whether the upgrade package has been modified.

Specifically, the signature system employs a private key corresponding to the signature certifacte of the online upgrade system to encrypt the first digest value to obtain the encrypted first digest value (*i.e.,* the signed digest). A signature certificate is an electronic document issued by a ceretification authority (CA) that consists of a digital string that verifies the identity information of network users. The signature certificate (SC) provides a means of verifying the identiy of network users on computer networks. It can be understood that the signature certificate of the online upgrade system is pre-stored in the signature system or sent by the upgrade system to the signature system along with the first digest value.

S 140, transmitting, by the online upgrade system, an application message to a key management system (KMS) to obtain a symmetric key for encrypting the upgrade package; wherein the application message includes a communication certificate of the online upgrade system.

The communication certificate and the signature certificate have the same format but are distinguished based on their respective purposes. The communication certificate is used for establishing mutual authentication between the server and the client. It involves encrypting communication data using the public key corresponding to the communication certificate and decrypting communication data using the private key corresponding to the communication certificate, thus ensuring the privacy of the communication data. On the other hand, the signature certificate is used for data signing. It involves signing the data using the private key corresponding to the certificate and verifying the data using the public key corresponding to the certificate, thus ensuring the authenticity of the data.

Furthermore, the application information also includes the version number of the upgrade package. In accordance with this, the key management system is further configured to bind the symmetric key with the upgrade package version number. This facilitates the centralized management of encryption keys for historical versions of the upgrade package.

S 150, generating, by the key management system, the symmetric key based on the application message; encrypting the symmetric key using a public key of the communication certificate; and feeding back an encrypted symmetric key to the online upgrade system.

Specifically, the key management system is capable of generating encryption keys based on encryption key algorithms. By using asymmetric keys to encrypt symmetric keys and transmitting them in ciphertext form, the security of symmetric key transmission is ensured. The encryption keys for the upgrade packages are securely stored in the key management system, allowing for centralized management of all historical encrypted upgrade package and reducing the risk of key loss.

S 160, decrypting, by the online upgrade system, the encrypted symmetric key using a private key of the communication certificate to obtain the symmetric key; symmetrically encrypting the upgrade package using the symmetric key to obtain an encrypted upgrade package.

S 170, generating, by the online upgrade system, a first random identity code, and transmitting the first random identity code to the signature system; signing, by the signature system, the first random identity code to obtain a first identity signature, and feeding back the first identity signature to the online upgrade system.

The principle of the signature system signing the first random identity code is the same as that of the signature system signing the aforementioned first digest value. In other words, the signature system utilizes the private key corresponding to the signature certificate of the online upgrade system to encrypt the first random identity code, thereby obtaining the first identity signature.

S 180, transmitting, by the online upgrade system, the first identity signature and the encrypted upgrade package to a content distribution system (CDS).

Furthermore, to enhance data security during the communication process, the step of transmitting, by the online upgrade system, the first identity signature and the encrypted upgrade package to a content distribution system includes the following step:

transmitting, by a first secure communication channel located between the online upgrade system and the content distribution system, the first identity signature and the encrypted upgrade package to the content distribution system. The first secure communication channel is established based on the Transport Layer Security (TLS) protocol and the communication certificate of the online upgrade system.

Namely, the certificate used to establish the first secure communication channel is the communication certificate of the online upgrade system, while the certificate in the signature system for the signing process is the signature certificate. The communication certificate and the signature certificate are distinct. This distinction further enhances data security. Specifically, if the same certificate were employed for both signing and encryption purposes, a compromise of the private key would render both functionalities untrustworthy. This is especially critical for signed data, which would need to be recalculated and updated in the content distribution system. In the embodiments of the present invention, the private key of the communication certificate is stored on the server and frequently accessed, leading to a relatively higher risk of leakage. On the other hand, the private key of the signature certificate is stored in the signature verification server of the signature system, providing enhanced storage security through physical device protection.

S190, verifying, by the content distribution system, the online upgrade system based on the first identity signature; storing the encrypted upgrade package for download requests from vehicle-side device (VD) when the online upgrade system is consistent with a first verification condition.

Specifically, the step of verifying, by the content distribution system, the online upgrade system based on the first identity signature includes: verifying, by the content distribution system, the first identity signature using the public key corresponding to the online upgrade system's signature certificate (which can be pre-stored in the content distribution system or sent along with the signature data). If the verification is successful, it indicates that the identity of the online upgrade system satisfies the first verification condition. Namely, the trustworthiness of the online upgrade system's identity is established and confirmed.

By verifying the identity of the online upgrade system based on the first identity signature, it ensures that the online upgrade system is trustworthy and has not been tampered with or maliciously modified, thereby guaranteeing the integrity of the upgrade package.

Through the aforementioned steps S 110 to S190, the encrypted upgrade package is obtained from a secure and trusted online upgrade system, and it is stored in the content distribution system for retrieval by the vehicle-side devices. To ensure that the vehicle-side devices obtain a trusted and secure upgrade package, it is crucial to prevent tampering and ensure that the vehicle-side devices retrieve the upgrade package from the correct and trusted content distribution system.

Exemplarily, the method for updating vehicle software further includes the following steps.

S200, transmitting, by the online upgrade system, a network address of the content distribution system to the signature system for the signature system to sign the network address and thereby obtaining a signed address; feeding back, by the signature system, the signed address to the online upgrade system. By signing the network address of the content distribution system, the integrity of the network address of the content distribution system is further enhanced.

The principle behind the signature system's processing on the network address is identical to the signature system's processing on the aforementioned first digest value. In other words, the signature system utilizes the private key corresponding to the signature certificate of the online upgrade system to encrypt the network address to obtain the signed address.

S210, in response to a first trigger action (e.g., the user's consent to the upgrade), establishing a second secure communication channel between a vehicle-side device and the online upgrade system based on the Transport Layer Security (TLS) protocol when the vehicle-side device receives an upgrade notification pushed by the online upgrade system; transmitting, by the vehicle-side device, a digital certificate of the vehicle-side device to the online upgrade system via the second secure communication channel.

S220, obtaining, by the online upgrade system, the corresponding public key based on the digital certificate, and transmitting the public key to the key management system; encrypting, by the key management system, the symmetric key using the public key to obtain a digital envelop for the symmetric key, and feeding back the digital envelope to the online upgrade system.

By encrypting the symmetric key, the symmetric key is kept from being compromised, and its security is ensured.

S230, transmitting, via the second secure communication channel, the digital envelop, the signed address, the signed digest, and the signature certificate of the signature system to the vehicle-side device.

Furthermore, to mitigate the risk of a single attack gaining access to all sensitive information, the present disclosure separates and distributes sensitive information. For example, the step of transmitting, via the second secure communication channel, the digital envelop, the signed address, the signed digest, and the signature certificate of the signature system to the vehicle-side device includes:

transmitting, by the online upgrade system, the digital envelope, the signed address, the signed digest, and the signature certificate of the signature system to the vehicle-side device individually through the second secure communication channel.

This means that the digital envelope, the signed address, the signed digest, and the signature certificate of the signature system are not packaged together and then sent to the vehicle-side device at once. Instead, they are sent separately, one by one, to the vehicle-side device. This approach reduces the risk of a single attack gaining access to all sensitive information.

S240, verifying, by a security middleware of the vehicle-side device, the signed address and the signature certificate of the signature system, and obtaining the encrypted upgrade package from the content distribution system upon confirming that the verification result satisfies a second verification condition.

The security middleware of the vehicle-side device refers to specialized software tools, such as TBOX, IVI, or OBU, that is installed on the vehicle-side device and is responsible for implementing tasks such as digital certificate verification, signature verification, encryption/decryption, and etc.

Specifically, the step of verifying, by a security middleware of the vehicle-side device, the signed address and the signature certificate of the signature system, and obtaining the encrypted upgrade package from the content distribution system upon confirming that the verification result satisfies a second verification condition includes:
verifying the signature certificate; upon confirming that the signature certificate satisfies a first condition, verifying the signed address; upon confirming that the signed address satisfies a second condition, verifying the signed digest; upon confirming that the signed digest satisfies a third condition, transmitting the parsed first digest value and the network address of the parsed content distribution system to the vehicle-side device via the secure middleware of the vehicle-side device; when the first condition is satisfied by the signature certificate, the second condition is satisfied by the signed address and the third condition is satisfied by the signed digest, determining that the validation result satisfies the second verification condition; in response to the second trigger action (e.g., a download request sent by the vehicle-side device to the content distribution system based on the parsed network address), establishing a third secure communication channel between the vehicle-side device and the content distribution system using the Transport Layer Security (TLS) protocol; transmitting, by the content distribution system, the encrypted upgrade package to the vehicle-side device through the third secure communication channel; decrypting, by the secure middleware, the encrypted upgrade package to obtain a plaintext of the upgrade package, calculating a second digest value of the plaintext of the upgrade package, and feeding the plaintext and the second digest value back to the vehicle-side device;
comparing, by the vehicle-side device, the second digest value and the first digest value; if the second digest value is matched the first digest value, storing the plaintext of the decrypted upgrade package, and performing software upgrade based on the plaintext of the decrypted upgrade package.

Exemplarily, the step of verifying the signature certificate includes: verifying the authenticity, and validity of the signature certificate. For instance, checking if the signature certificate has expired, verifying the legality of the signature certificate through certificate chain validation (*e.g.*, checking if the signature has been revoked by referring to a certificate revocation list; if the certificate is not revoked, it can be confirmed as a valid certificate); once the signature certificate is determined that the signature certificate is within its validity period, and is legitimate, it can be established that the signature certificate satisfies the first condition.

The process of verifying the signed address is as follows: The signed address is verified by using the public key corresponding to the signature certificate of the online upgrade system to perform signature verification. If the signature verification is successful, it can be determined that the signed address satisfies the second condition. It is notable that the signature certificate of the online upgrade system is pre-stored in the secure middleware of the vehicle-side device.

The process of verifying the signed digest is as follows: The signed digest is verified by using the public key corresponding to the signature certificate of the online upgrade system to perform signature verification. If the signature verification is successful, it can be determined that the signed digest satisfies the third condition. By decrypting the signed digest, the parsed first digest value is obtained. The secure middleware of the vehicle-side device is responsible for transmitting the parsed first digest value and the parsed network address of the content distribution system to the vehicle-side device. The parsed first digest value is used by the vehicle-side device to confirm whether it has downloaded the correct upgrade package.

The process of decrypting the encrypted upgrade package through the secure middleware is as follows: The secure middleware utilizes the private key corresponding to the digital certificate of the vehicle-side device to decrypt the digital envelope to obtain the symmetric key contained within the digital envelop. Subsequently, the encrypted upgrade package is decrypted using this symmetric key to obtain the plaintext of the upgrade package.

In order to further enhance the data security during the transmission process, before the content distribution system sends the encrypted upgrade package to the vehicle-side device through the third secure communication channel, the method for upgrading the vehicle software further includes the following steps:
signing, by the vehicle-side device, a request information to obtain a signature request;
generating, by the vehicle-side device, a second random identity code, and signing the second random identity code to obtain a second identity signature;
transmitting, by the vehicle-side device, the second identity signature and the signature request to the content distribution system through the third secure communication channel;
verifying the identity of the vehicle-side device, by the content distribution system, based on the second identity signature; upon confirming that the identity of the vehicle-side device satisfies a third validation condition, transmitting, by the content distribution system, the encrypted upgrade package to the vehicle-side device through the third secure communication channel in accordance with the signature request.

Specifically, the process of the content distribution verifying the identity of the vehicle-side device based on the second identity signature and the signature request is as follows: The content distribution system performs signature verification on the second identity signature using the public key of the digital certificate of the vehicle-side device. If the signature verification is successful, it can be confirmed that the identity of the vehicle-side device is trustworthy. Following this, the content distribution system proceeds to send the encrypted upgrade package to the vehicle-side device through the third secure communication channel, in accordance with the request information.

By incorporating the verification of the second identity signature, the security can be further enhanced, ensuring that the upgrade package is sent to the correct vehicle-side device.

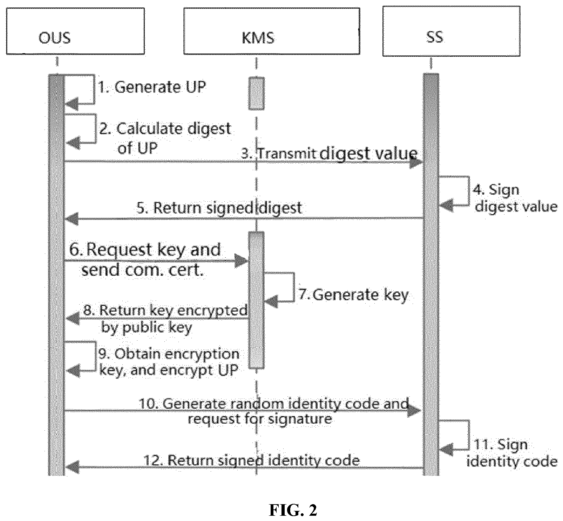

In alternative embodiments, as shown in FIG. 2, an information exchange diagram between the online upgrade system, the key management system, the signature system, and the content distribution system is provided. The method for updating software including the following steps:
1, The online upgrade system generate the upgrade package. 2, the online upgrade system calculates the digest of the upgrade package. Specially, a HASH algorithm is used to calculate the digest value of the upgrade package for signing the digest value. Since the size of the upgrade package can vary and can be as large as 2-3 GB, directly performing signature operations on the entire package is inefficient. Calculating the digest value, which has a fixed length, allows for more efficient signature operations. 3, The online upgrade system sends the digest value to the signing system for signing. 4, The signature system creates a digital signature for the digest value. The signature system mainly includes a signature server, and is configured to encrypt the digest value by the private key corresponding to the signature certificate of the online upgrade system. 5, The signature system returns the signed digest to the online upgrade system. 6, The online upgrade system requests the symmetric key from the key management system for encrypting the upgrade package by the symmetric key, and the online upgrade system also sends a communication certificate to the key management system so that the key management system can encrypt the symmetric key using the public key of the communication certificate. 7, The key management system generates the symmetric key using an encryption key algorithm and encrypts the symmetric key using the public key of the communication certificate of the online upgrade system, namely the digital envelope. 8, The key management system returns the symmetric key encrypted with the public key to the online upgrade system. 9, The online upgrade system decrypts the encrypted key using the private key corresponding to the communication certificate of the online upgrade system to obtain the symmetric key, and then performing symmetric encryption on the upgrade package by the symmetric key. 10, The online upgrade system generates a random identity code and requests for a signature, and then transmits the encrypted upgrade package along with the identity code (IC) to the content distribution system to verify the identity of the online upgrade system. 11, The signature system signs the identity code of the online upgrade system according to the same principles as described in step 4. 12, The signature system returns the signed identity code to the online upgrade system.

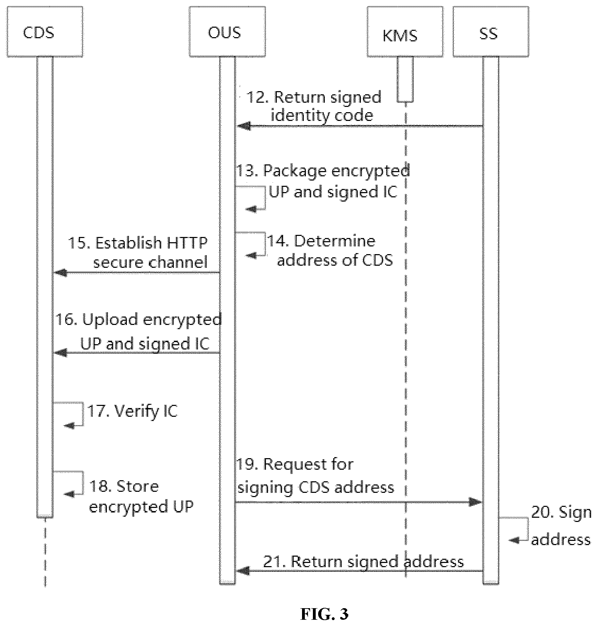

Continuing to FIG. 3, 13, The online upgrade system packages the encrypted upgrade package with the signed identity code in preparation for transmission. 14, The online upgrade system verifies the network address of the content distribution system for targeted delivery. 15, The online upgrade system establishes a secure TLS channel with the content distribution system, which can be either unidirectional HTTPS (Hyper Text Transfer Protocol Secure) or bidirectional HTTPS. Alternatively, the option exists to forgo the establishment of a secure channel. Additionally, the online upgrade system and the content distribution system can be integrated together, or connected via an internal network or VPN (Virtual Private Network). 16, The online upgrade system dispatches the encrypted upgrade package and the signed identity code to the content distribution system. 17, The content distribution system verifies the identity of the message sender by deciphering the signed identity code and conducting a validation process. Successful validation indicates the received message's reliability. 18, The content distribution system securely stores the encrypted upgrade package for subsequent retrieval by the vehicle-side device. 19, The online upgrade system requests the signing of the content distribution system's address to ensure its integrity throughout the transmission. 20, The signing system affixes a signature to the address, utilizing the same signing principles as outlined in step 4. 21, The signing system returns the signed address to the online upgrade system.

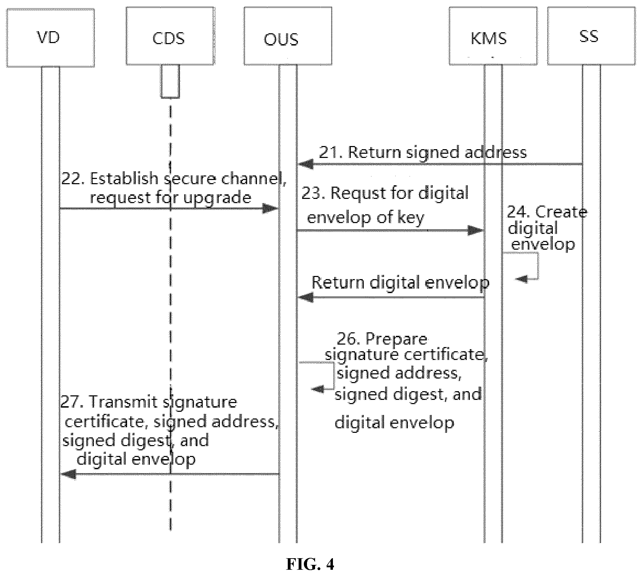

Continuing to FIG. 4, 22, Upon receiving the upgrade notification from the online upgrade system, the vehicle owner has the discretion to decide whether to proceed with the upgrade. If the decision is affirmative, the vehicle-side device establishes a secure TLS channel with the online upgrade system. This channel can be either unidirectional or bidirectional HTTPS. During this process, the vehicle-side device sends its digital certificate to the online upgrade system. 23, The online upgrade system extracts the public key from the digital certificate of vehicle-side device and requests the key management system to create a digital envelope. 24, The key management system creates the digital envelope. 25, The key management system returns the digital envelope of the encrypted key to the online upgrade system. 26, The online upgrade system prepares the signature certificate, the signed address of the content distribution system, the signed digest of the upgrade package and the digital envelope for transmission to the vehicle-side device. 27, The online upgrade system transmits the address of the content distribution system, the signed digest of the upgrade package, and the digital envelope to the vehicle-side device. Optionally, the aforementioned information can be transmitted in batches or in multiple parts.

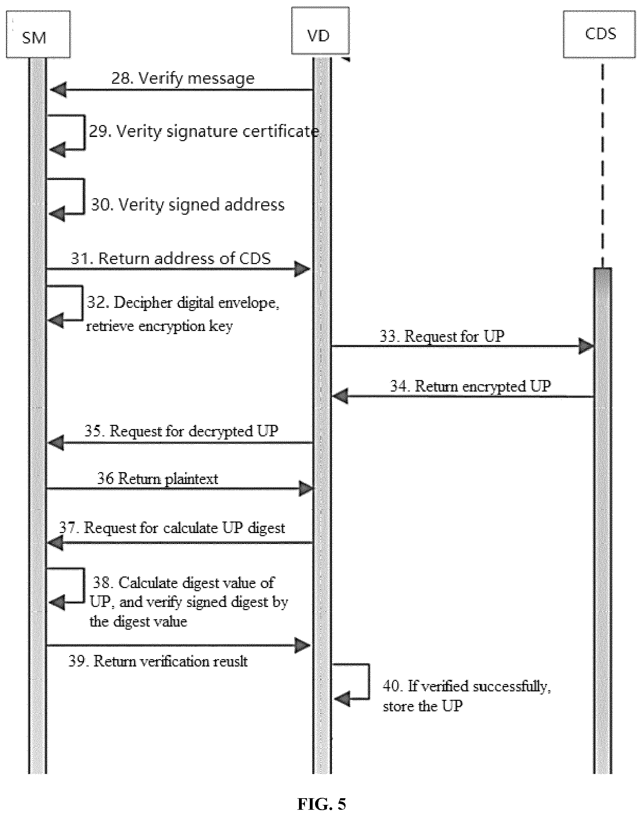

Continuing to FIG. 5, 28, Upon receiving the message, the vehicle-side device needs to verify the authenticity of the message. 29, Firstly, verifying the authenticity and validity of the signature certificate. Specifically, this involves checking the certificate's expiration date and verifying its legitimacy through certificate chain validation. Optionally, the signature certificate can be verified against a certificate revocation list to determine if the signature certificate has been revoked. 30, After successful verification of the signature certificate, verifying the signature message. Specifically, verifying the address of the content distribution system. 31, If the signed message is verified successfully, the address of the content distribution system address is returned to the vehicle-side device. 32, The vehicle-side security middleware deciphers the digital envelope, retrieves the encryption key of the encrypted upgrade package, and stores the encryption key. 33, The vehicle-side device requests the download of the upgrade package based on the address of the content distribution system. Optionally, the vehicle-side device can establish a secure channel with the content distribution network, which can be unidirectional or bidirectional HTTPS. Optionally, the request message can be signed, meaning the SDK uses the private key of the vehicle-side certificate to encrypt the request message before sending the request message to the content distribution system. Correspondingly, the content returns the encrypted upgrade package after the content distribution system verifies the signature. Optionally, referring to the random identity code generated by the online upgrade system, the vehicle-side device also generates and signs a random identity code. The content distribution system verifies the signature (i.e., verifies the identity of the vehicle) before delivering the encrypted upgrade package. 34, The content distribution system delivers the encrypted upgrade package to the vehicle-side device. 35, The vehicle-side device employs the vehicle-side security middleware to decrypt the upgrade package. 36, The vehicle-side device receives the plaintext of decrypted upgrade package. 37, The vehicle-side device utilizes the vehicle-side security middleware to calculate the digest value of the upgrade package, the digest value being used for verifying signature of the signed digest. Optionally, the step of calculating the digest of the upgrade package can be done by the vehicle-side device itself. 38, The vehicle-side security middleware calculates the digest of the upgrade package and verifies the signed digest using the digest value of the upgrade package. The verification result is then returned to the vehicle-side device. 39, The verification result is returned. 40, If the verification is successful, the upgrade package is determined trustworthy and stored. Based on the upgrade policy, the upgrade is initiated at an appropriate time. Otherwise, the upgrade package is discarded.

The embodiments of the present invention uses both symmetric and asymmetric keys simultaneously. The symmetric key is encrypted using the asymmetric key and transmitted in ciphertext form, ensuring the security of the symmetric key. The encryption key for the upgrade package is securely stored in the key management system, facilitating the management of all historical encrypted upgrade packages and eliminating the risk of key loss. All sensitive information is signed using digital certificates, allowing the recipient to verify the identity of the sender and the authenticity of the transmitted information. This mitigates the risk of spreading forged information and prevents hijacking attacks during the upgrade process. The sender separates and distributes sensitive information, reducing the risk of a single attack acquiring all sensitive information. The recipient verifies and compares multiple received messages, considering them trustworthy only if the verification passes, thereby enhancing security and trust. The content distribution system verifies the identity of the message sender, effectively preventing illegal systems from uploading unauthorized upgrade packages. The encrypted form of the upgrade package stored in the content distribution system makes it difficult to tamper with or steal the upgrade package. These measures enhance the security of the software upgrade process and provide comprehensive protection for network security and data security in every stage of the online upgrade of the networked-vehicle.

Embodiments of the present invention further provides an apparatus for updating vehicle software. The apparatus includes an online upgrade system, a signature system, a key management system, a content distribution system, a vehicle-side device, and a secure middleware of the vehicle-side device.

When a new upgrade package is generated in the online upgrade system, the online upgrade system calculates the digest of the upgrade package to obtain the first digest value of the upgrade package. The first digest value is then sent to the signature system by the online upgrade system. The signature system signs the first digest value to obtain a signed digest, and feeds the signed digest back to the online upgrade system. The signed digest is used to determine if the upgrade package has been modified. The online upgrade system sends an application message to the key management system to obtain a symmetric key for encrypting the upgrade package. The application message includes the communication certificate of the online upgrade system. The key management system generates the symmetric key based on the application message and encrypts the symmetric key using the public key of the communication certificate. The encrypted symmetric key is then sent back to the online upgrade system. The online upgrade system decrypts the encrypted symmetric key using the private key of the communication certificate to obtain the symmetric key. The upgrade package is symmetrically encrypted using the symmetric key, resulting in an encrypted upgrade package. The online upgrade system generates a first random identity code and sends the first random identity code to the signature system. The signature system signs the first random identity code to obtain the first identity signature, and feeds the first identity signature back to the online upgrade system. The online upgrade system sends the first identity signature and the encrypted upgrade package to the content distribution system. The content distribution system verifies the identity of the online upgrade system based on the first identity signature. If the identity of the online upgrade system satisfies the first verification condition, the encrypted upgrade package is stored for the vehicle-side device to request download. The online upgrade system sends the network address of the content distribution system to the signature system. The signature system signs the network address to obtain a signed address, and feeds the signed address back to the online upgrade system. When the vehicle-side device receives the upgrade notification from the online upgrade system, in response to the first trigger action, a second secure communication channel between the vehicle-side device and the online upgrade system is established based on the Transport Layer Security (TLS) protocol. The vehicle-side device sends the digital certificate of the vehicle-side device to the online upgrade system through the second secure communication channel. The online upgrade system retrieves the corresponding public key from the digital certificate and sends the public key to the key management system. The key management system encrypts the symmetric key using the public key to obtain a digital envelope for the symmetric key. The digital envelope is then sent back to the online upgrade system. The online upgrade system sends the digital envelope, the signed address, the signed digest, and the signature certificate of the signature system to the vehicle-side device through the second secure communication channel. The security middleware of the vehicle-side device verifies the signed address and the signature certificate of the signature system. If the verification results satisfy the second verification condition, the encrypted upgrade package is obtained from the content distribution system.

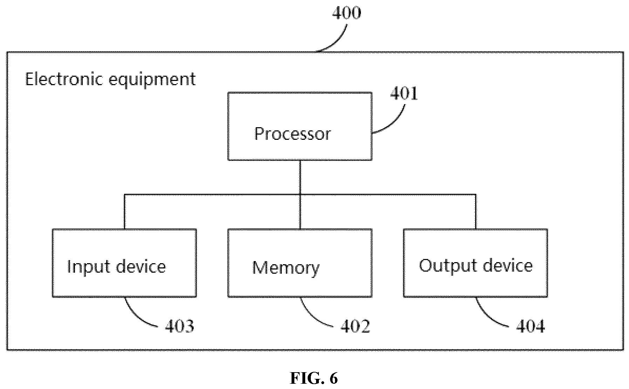

FIG. 6 is a schematic diagram of an electronic equipment according to embodiments of the present in invention. As shown in FIG. 6, the electronic equipment 400 includes one or more processor 401 and a memory 402.

The processor 401 may be a central processing unit (CPU) or any other form of processing unit with data processing and/or instruction execution capabilities. It holds the ability to govern the other components within the electronic equipment, referred to as 400, in order to fulfill the desired functionalities.

The memory 402 may include one or multiple computer program products. These products encompass various forms of computer-readable storage media, such as volatile and/or non-volatile storage. Volatile storage may include random-access memory (RAM) and high-speed cache, while non-volatile storage may consist of read-only memory (ROM), hard drives, flash memory, among others. Within the computer-readable storage media, one or more computer program instructions can be stored. The processor, denoted as 401, can execute these instructions to realize the vehicle software upgrade method described in the preceding context, along with other desired functionalities. Additionally, the computer-readable storage media can also store various contents such as initial parameters and thresholds.

In one embodiment, the electronic equipment 400 may further include an input device 403 and an output device 404. These components are interconnected through a bus system and/or other forms of connecting mechanisms (not shown). The input device 403 may include devices like keyboards and mice, while the output device 404 is configured for conveying diverse information to the external environment, including warning prompts and braking force. Examples of output devices include displays, speakers, printers, as well as communication networks and remotely connected output devices.

Naturally, for the sake of simplification, Figure 6 only presents a selection of components relevant to the present invention within the electronic device 400, omitting components such as buses and input/output interfaces, among others. Furthermore, depending on specific application scenarios, the electronic device 400 may incorporate any other suitable components.

In addition to the aforementioned methods and apparatues, embodiments of the present invention may also take the form of computer program products. These products include computer program instructions that, when executed by the processor, enable the processor to perform the steps of the method for updating vehicle software as provided in embodiments of the present invention.

The computer program products can be written in one or more programming languages, in any combination, to implement the operations of the embodiments of the present invention. These programming languages include object-oriented programming languages such as Java and C++, as well as conventional procedural programming languages like "C" or similar programming languages. The program code can be executed entirely on a user's computing device, partially on the user's device, as a standalone software package, partially on the user's computing device and partially on a remote computing device, or entirely on a remote computing device or server.

Furthermore, embodiments of the present invention can also take the form of computer-readable storage media that store computer program instructions. These computer program instructions, when executed by a processor, enable the processor to perform the steps of the vehicle software upgrade method provided in any embodiment of the present invention.

The computer-readable storage media can utilize any combination of one or more readable media. Readable media can be in the form of readable signal media or readable storage media. Examples of readable storage media include, but are not limited to, systems, devices, or apparatuses based on electrical, magnetic, optical, electromagnetic, infrared, or semiconductor technology, or any combination thereof. Specific examples of readable storage media (non-exhaustive list) include electronically connected media with one or more wires, portable disks, hard disks, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination of the above.

It should be noted that the terms used in the present invention are solely for the purpose of describing specific embodiments and should not be construed as limiting the scope of the application. As shown in the present invention specification, unless otherwise explicitly indicated in context, words such as "one," "a," "an," and/or "the" are not limited to singular form and may include plural form. The terms "comprise," "include," or any other variations thereof are intended to encompass non-exclusive inclusion, such that a process, method, or device comprising a series of elements includes not only those elements explicitly listed, but also includes other elements not expressly mentioned or inherent to such process, method, or device. Unless otherwise limited, when an element is described as "including a...," it does not exclude the presence of additional identical elements in the process, method, or device that includes said element.

Additionally, it should be clarified that terms, such
as "center," "top," "bottom," "left," "right," "vertical," "horizontal," "inside," "outside," or any other indications of orientation or positional relationship, are based on the orientation or positional relationship shown in the drawings, and are used for ease of describing the present invention and simplifying the description. They should not be construed as indicating or implying that the referred apparatus or components must have specific orientations, be constructed or operated in specific orientations. Therefore, they should not be understood as limitations on the present invention. Unless otherwise specified and defined, terms such
as "install," "connect," "couple," etc., should be broadly understood. For example, they can refer to fixed connections or detachable connections, mechanical connections or electrical connections, direct connections or indirect connections through intermediate media, and connections within the components themselves. Those skilled in the art can understand the specific meanings of the above terms in the context of the present invention based on specific circumstances.

At last, it should be noted that the above embodiments are only used to illustrate the technical solutions of the present invention, but not to limit them; although the present invention has been described in detail with reference to the foregoing embodiments, those of ordinary skill in the art should understand that: The technical solutions described in the foregoing embodiments can still be modified, or some or all of the technical features thereof can be equivalently replaced; and these modifications or replacements do not make the essence of the corresponding technical solutions deviate from the technical solutions of the embodiments of the present invention.

## Claims

1. A method for updating vehicle software, **characterized by** comprising:
calculating, by an online upgrade system, a digest of an upgrade package to obtain a first digest value of the upgrade package when the upgrade package is generated in the online upgrade system;
transmitting, by the online upgrade system, the first digest value to a signature system;
signing, by the signature system, the first digest value to obtain a signed digest; feeding back, by the signature system, the signed digest to the online upgrade system; wherein the signed digest is configured to determine whether the upgrade package has been modified;
transmitting, by the online upgrade system, an application message to a key management system to obtain a symmetric key for encrypting the upgrade package; wherein the application message includes a communication certificate of the online upgrade system;
generating, by the key management system, the symmetric key based on the application message; encrypting the symmetric key using a public key of the communication certificate; and feeding back an encrypted symmetric key to the online upgrade system;
decrypting, by the online upgrade system, the encrypted symmetric key using a private key of the communication certificate to obtain the symmetric key; symmetrically encrypting the upgrade package using the symmetric key to obtain an encrypted upgrade package;
generating, by the online upgrade system, a first random identity code, and transmitting the first random identity code to the signature system; signing, by the signature system, the first random identity code to obtain a first identity signature, and feeding back the first identity signature to the online upgrade system;
transmitting, by the online upgrade system, the first identity signature and the encrypted upgrade package to a content distribution system;
verifying, by the content distribution system, the online upgrade system based on the first identity signature; storing the encrypted upgrade package for download requests from vehicle-side device when the online upgrade system is consistent with a first verification condition;
transmitting, by the online upgrade system, a network address of the content distribution system to the signature system; signing, by the signature system, the network address to obtain a signed address; and feeding, by the signature system, the signed address back to the online upgrade system;
in response to a first trigger action, establishing a second secure communication channel between a vehicle-side device and the online upgrade system based on the Transport Layer Security (TLS) protocol when the vehicle-side device receives an upgrade notification pushed by the online upgrade system; transmitting, by the vehicle-side device, a digital certificate of the vehicle-side device to the online upgrade system via the second secure communication channel;
obtaining, by the online upgrade system, a corresponding public key based on the digital certificate, and transmitting the public key to the key management system; encrypting, by the key management system, the symmetric key using the public key to obtain a digital envelop for the symmetric key, and feeding back the digital envelope to the online upgrade system;
transmitting, via the second secure communication channel, the digital envelop, the signed address, the signed digest, and the signature certificate of the signature system to the vehicle-side device; and
verifying, by a security middleware of the vehicle-side device, the signed address and the signature certificate of the signature system, and obtaining the encrypted upgrade package from the content distribution system upon confirming that the verification result satisfies a second verification condition;
the step of transmitting, via the second secure communication channel, the digital envelop, the signed address, the signed digest, and the signature certificate of the signature system to the vehicle-side device comprises:
transmitting, by the online upgrade system, the digital envelope, the signed address, the signed digest, and the signature certificate of the signature system to the vehicle-side device individually through the second secure communication channel.

2. The method according to claim 1, **characterized in that** the step of verifying, by a security middleware of the vehicle-side device, the signed address and the signature certificate of the signature system, and obtaining the encrypted upgrade package from the content distribution system upon confirming that the verification result satisfies a second verification condition comprises:
verifying the signature certificate; upon confirming that the signature certificate satisfies a first condition, verifying the signed address; upon confirming that the signed address satisfies a second condition, verifying the signed digest; upon confirming that the signed digest satisfies a third condition, transmitting the parsed first digest value and the network address of the parsed content distribution system to the vehicle-side device via the secure middleware of the vehicle-side device; when the first condition is satisfied by the signature certificate, the second condition is satisfied by the signed address and the third condition is satisfied by the signed digest, determining that the validation result satisfies the second verification condition;
in response to a second trigger action, establishing a third secure communication channel between the vehicle-side device and the content distribution system using the Transport Layer Security (TLS) protocol;
transmitting, by the content distribution system, the encrypted upgrade package to the vehicle-side device through the third secure communication channel.

3. The method according to claim 2, **characterized in that** before the step of transmitting, by the content distribution system, the encrypted upgrade package to the vehicle-side device through the third secure communication channel, the method further comprises:
signing, by the vehicle-side device, a request information to obtain a signature request;
generating, by the vehicle-side device, a second random identity code, and signing the second random identity code to obtain a second identity signature;
transmitting, by the vehicle-side device, the second identity signature and the signature request to the content distribution system through the third secure communication channel;
verifying the identity of the vehicle-side device, by the content distribution system, based on the second identity signature; upon confirming that the identity of the vehicle-side device satisfies a third validation condition, transmitting, by the content distribution system, the encrypted upgrade package to the vehicle-side device through the third secure communication channel in accordance with the signature request.

4. The method according to claim 2, **characterized in that** the method further comprises:
decrypting, by the secure middleware, the encrypted upgrade package to obtain a plaintext of the upgrade package, calculating a second digest value of the plaintext of the upgrade package, and feeding the plaintext and the second digest value back to the vehicle-side device;
verifying the signed digest in accordance to the second digest value; if verification is successful, storing the plaintext of the decrypted upgrade package, and performing software upgrade based on the plaintext of the decrypted upgrade package.

5. The method according to claim 1, **characterized in that**, the step of transmitting, by the online upgrade system, the first identity signature and the encrypted upgrade package to a content distribution system comprises:
transmitting, via a first secure communication channel between the online upgrade system and the content distribution system, the first identity signature and the encrypted upgrade package to the content distribution; wherein the first secure communication channel is established based on the TLS protocol and the communication certificate of the online upgrade system;
the application information further comprises a version number of the upgrade package; correspondingly, the key management system is further configured to bind the symmetric key with the version number of the upgrade package.

6. An apparatus for updating vehicle-side device, **characterized by** comprising an online upgrade system, a signature system, a key management system, a content distribution system, a vehicle-side device, and a secure middleware of the vehicle-side device; the apparatus is configured to execute the following steps:
calculating, by an online upgrade system, a digest of an upgrade package to obtain a first digest value of the upgrade package when the upgrade package is generated in the online upgrade system;
transmitting, by the online upgrade system, the first digest value to a signature system;
signing, by the signature system, the first digest value to obtain a signed digest; feeding back, by the signature system, the signed digest to the online upgrade system; wherein the signed digest is configured for determining whether the upgrade package has been modified;
transmitting, by the online upgrade system, an application message to a key management system to obtain a symmetric key for encrypting the upgrade package; wherein the application message includes a communication certificate of the online upgrade system;
generating, by the key management system, the symmetric key based on the application message; encrypting the symmetric key using a public key of the communication certificate; and feeding back an encrypted symmetric key to the online upgrade system;
decrypting, by the online upgrade system, the encrypted symmetric key using a private key of the communication certificate to obtain the symmetric key; symmetrically encrypting the upgrade package using the symmetric key to obtain an encrypted upgrade package;
generating, by the online upgrade system, a first random identity code, and transmitting the first random identity code to the signature system; signing, by the signature system, the first random identity code to obtain a first identity signature, and feeding back the first identity signature to the online upgrade system;
transmitting, by the online upgrade system, the first identity signature and the encrypted upgrade package to a content distribution system;
verifying, by the content distribution system, the online upgrade system based on the first identity signature; storing the encrypted upgrade package for download requests from vehicle-side device when the online upgrade system is consistent with a first verification condition;
transmitting, by the online upgrade system, a network address of the content distribution system to the signature system; signing, by the signature system, the network address to obtain a signed address; and feeding, by the signature system, the signed address back to the online upgrade system;
in response to a first trigger action, establishing a second secure communication channel between a vehicle-side device and the online upgrade system based on the Transport Layer Security (TLS) protocol when the vehicle-side device receives an upgrade notification pushed by the online upgrade system; transmitting, by the vehicle-side device, a digital certificate of the vehicle-side device to the online upgrade system via the second secure communication channel;
obtaining, by the online upgrade system, a corresponding public key based on the digital certificate, and transmitting the public key to the key management system; encrypting, by the key management system, the symmetric key using the public key to obtain a digital envelop for the symmetric key, and feeding back the digital envelope to the online upgrade system;
transmitting, via the second secure communication channel, the digital envelop, the signed address, the signed digest, and the signature certificate of the signature system to the vehicle-side device; and
verifying, by a security middleware of the vehicle-side device, the signed address and the signature certificate of the signature system, and obtaining the encrypted upgrade package from the content distribution system upon confirming that the verification result satisfies a second verification condition.

7. An electronic equipment, **characterized in that** the electronic equipment comprises:
a processor and a memory;
the processor is configured for storing programs or instructions in the memory to execute the steps of the method for updating vehicle software according to any one of claims 1 to 5.

8. A computer-readable storage medium, **characterized in that** the computer-readable storage medium is configured to store programs or instructions which enable a computer to execute the steps of the method for updating vehicle software according to any one of claims 1 to 5.
